# EUROPEAN PATENT APPLICATION

(11) **EP 4 333 192 A1**
(43) Date of publication of application: **06.03.2024**
(21) Application number: 23737850.0
(22) Date of filing: 19.06.2023
(51) Int. Cl.: H01M 50/533, H01M 50/547, H01M 50/519, H01M 50/209, H01M 50/247

(54) **BATTERY PACK AND ELECTRONIC DEVICE INCLUDING SAME**

(30) Priority: 20.07.2022 KR 20220089725; 31.08.2022 KR 20220109675
(71) Applicant: Samsung Electronics Co., Ltd., Suwon-si, Gyeonggi-do 16677 (KR)
(72) Inventor: LIM, Gisoo, Suwon-si Gyeonggi-do 16677 (KR); KIM, Gilho, Suwon-si Gyeonggi-do 16677 (KR); SONG, Juho, Suwon-si Gyeonggi-do 16677 (KR); YUN, Yongsang, Suwon-si Gyeonggi-do 16677 (KR); JUNG, Sinyoung, Suwon-si Gyeonggi-do 16677 (KR); CHOI, Kwanghoon, Suwon-si Gyeonggi-do 16677 (KR)
(74) Representative: Gulde & Partner
(86) International application number: PCT/KR2023/008480
(87) International publication number: WO 2024/019335

(57) **Abstract**

According to an embodiment of the disclosure, a battery pack may comprise a first casing including a first inner surface, an inner wall surface extending from an edge of the first inner surface, and a stepped portion protruding from the inner wall surface, a second casing including a second inner surface disposed to face the first inner surface and coupled to the first casing to seal a space surrounded by the first inner surface and the inner wall surface, a battery cell at least partially received in a space between the first inner surface and the second inner surface and including a first main surface facing the first inner surface, a second main surface disposed to face in a direction opposite to the first main surface and facing the second inner surface, and an outer wall surface connecting the second main surface to the first main surface and facing at least a portion of the stepped portion or the inner wall surface, and an electrode tab extending from the battery cell. The electrode tab may be disposed between the second inner surface and the stepped portion while being in contact with the stepped portion. Other various embodiments are possible.

## Description

### [Technical Field]

An embodiment(s) of the disclosure relates to an electronic device, e.g., a battery pack and an electronic device including the same.

### [Background Art]

As electronics, information, or communication technology grows, an electronic device comes equipped with various functions. For example, smartphones pack the functionalities of a sound player, imaging device, and scheduler, as well as the communication functionality and, on top of that, may implement more various functions by having applications installed thereon. An electronic device may not only its equipped applications or stored files but also access, wiredly or wirelessly, a server or another electronic device to receive, in real-time, various pieces of information.

With advanced performance and downsizing, it becomes common to carry and use electronic devices, and there have been provided various types of portable electronic devices. For example, a plurality of portable electronic devices, such as a smartphone, a tablet personal computer (PC), a smart watch, a wireless earphone, and/or smart glasses, may be carried and used by one user.

The above-described information may be provided as background for the purpose of helping understanding of the disclosure. No claim or determination is made as to whether any of the foregoing is applicable as prior art in relation to the disclosure.

### [Disclosure]

### [Technical Solution]

According to an embodiment of the disclosure, a battery pack comprises a battery cell including an electrode assembly and electrode tabs extending from the electrode assembly, a first casing including a first inner surface, a space partially defined by the first inner surface and configured to accommodate at least a portion of the electrode assembly, and a stepped portion disposed at one side of the first inner surface, a second casing including a second inner surface disposed to face the first inner surface and coupled to the first casing to seal an inner space of the first casing. In an embodiment, the electrode tabs are disposed between the second inner surface and the stepped portion while being in contact with the stepped portion.

According to an embodiment of the disclosure, a battery pack comprises a first casing including a first inner surface, an inner wall surface extending from an edge of the first inner surface, and a stepped portion protruding from the inner wall surface, a second casing including a second inner surface disposed to face the first inner surface and coupled to the first casing to seal a space surrounded by the first inner surface and the inner wall surface, a battery cell at least partially received in a space between the first inner surface and the second inner surface and including a first main surface facing the first inner surface, a second main surface disposed to face in a direction opposite to the first main surface and facing the second inner surface, and an outer wall surface connecting the second main surface to the first main surface and facing at least a portion of the stepped portion or the inner wall surface, and an electrode tab extending from the battery cell. The electrode tab is disposed between the second inner surface and the stepped portion while being in contact with the stepped portion.

According to an embodiment of the disclosure, a battery pack comprises a battery cell including an electrode tab extending in one direction, a first casing receiving at least a portion of the battery cell and including a stepped portion protruding from an inner wall surface to the battery cell and one open face, and a second casing coupled to the one open face of the first casing to seal the battery cell. The electrode tab is at least partially disposed between an inner surface of the second casing and the stepped portion while being in contact with the stepped portion.

According to an embodiment of the disclosure, an electronic device comprises a housing including a front surface and a rear surface facing in a direction opposite to the front surface, a display configured to output a screen through at least a portion of the front surface, and a battery pack disposed between the display and the rear surface. The battery pack includes a battery cell including an electrode tab extending in one direction, a first casing receiving at least a portion of the battery cell and including a stepped portion protruding from an inner wall surface to the battery cell and one open face, and a second casing coupled to the one open face of the first casing to seal the battery cell. The electrode tab is at least partially disposed between an inner surface of the second casing and the stepped portion while being in contact with the stepped portion.

### [Brief Description of the Drawings]

The foregoing and other aspects, configurations, and/or advantages of an embodiment of the disclosure will be more apparent from the following detailed description taken in conjunction with the accompanying drawings.
FIG. 1 is a block diagram illustrating an electronic device in a network environment according to an embodiment of the disclosure;
FIG. 2 is a front perspective view illustrating an electronic device according to an embodiment of the disclosure;
FIG. 3 is a rear perspective view illustrating the electronic device of FIG. 2 according to an embodiment of the disclosure;
FIG. 4 is an exploded perspective view illustrating the electronic device of FIG. 2 according to an embodiment of the disclosure;
FIG. 5 is a perspective view illustrating a battery pack according to an embodiment of the disclosure;
FIG. 6 is an exploded perspective view illustrating a battery pack according to an embodiment of the disclosure;
FIG. 7 is a perspective view illustrating a state in which a battery cell is disposed in a first casing in a battery pack according to an embodiment of the disclosure;
FIG. 8 is a perspective view illustrating a first casing of a battery pack according to an embodiment of the disclosure;
FIG. 9 is an exploded perspective view illustrating a battery pack according to an embodiment of the disclosure;
FIG. 10 is a view illustrating a battery pack according to an embodiment of the disclosure;
FIG. 11 is a view illustrating comparison between battery packs according to embodiments of the disclosure;
FIG. 12 is a view illustrating a battery pack according to an embodiment of the disclosure;
FIG. 13 is a view illustrating a battery pack according to an embodiment of the disclosure;
FIG. 14 is a front perspective view illustrating an electronic device according to an embodiment of the disclosure;
FIG. 15 is a perspective view illustrating a rear surface of the electronic device of FIG. 14 according to an embodiment of the disclosure;
FIG. 16 is an exploded perspective view illustrating the electronic device of FIG. 14 according to an embodiment of the disclosure.

Throughout the drawings, like reference numerals may be assigned to like parts, components, and/or structures.

### [Mode for Carrying out the Invention]

As portable electronic devices, such as smartphones, are used commonly for a long time outside, users' interest is oriented to the power capacity of the battery pack as the power source. As portable electronic devices, such as tablet PCs, smart watches, wireless earphones, and/or smart glasses, come in diversified shapes, users' interest in the power capacity or power efficiency of the battery pack may further increase. However, limitations are imposed on the size or weight of the portable electronic device, rendering it difficult to enhance the power capacity of the battery pack.

An embodiment of the disclosure aims to address the foregoing issues and/or drawbacks and provide advantages described below, providing a battery pack that comes in reduced size and may easily secure power capacity and/or an electronic device including the same.

According to an embodiment of the disclosure, there may be provided a battery pack easy to manufacture or assemble and/or an electronic device including the same.

Objects of the disclosure are not limited to the foregoing, and other unmentioned objects would be apparent to one of ordinary skill in the art from the following description.

According to an embodiment of the disclosure, the electrode tab is coupled to the electrode tab to substantially remain in an unbent state in placing the battery cell in the casing or protection member. For example, while the battery cell is placed or assembled in the casing, the deformation of the electrode tab may be suppressed, preventing damage to the electrode tab or keeping the electrode tab stably coupled with the electrode terminal. Thus, it is possible to facilitate manufacture or assembly of the battery pack and mitigate defects. According to an embodiment, although no separate insulator or supporting member is disposed, the electrode tab may remain in the designed position or shape in the casing. For example, a supporting structure for maintaining the position and shape of the electrode tab is unnecessary, so that the volume (or power capacity) of the battery cell relative to the inner space of the casing may be increased. For structures which have the same battery cell volume or power capacity, the battery pack according to an embodiment may be downsized as much as it corresponds to the volume of the supporting structure.

Effects of the disclosure are not limited to the foregoing, and other unmentioned effects would be apparent to one of ordinary skill in the art from the following description.

The following description taken in conjunction with the accompanying drawings may provide an understanding of various exemplary implementations of the disclosure, including claims and their equivalents. The specific embodiments disclosed in the following description entail various specific details to aid understanding, but are regarded as one of various embodiments. Accordingly, it will be understood by those skilled in the art that various changes and modifications may be made to the various implementations described in the disclosure without departing from the scope of the disclosure. Further, descriptions of well-known functions and configurations may be omitted for clarity and brevity.

The terms and words used in the following description and claims are not limited to the bibliographical meaning, but may be used to clearly and consistently describe an embodiment of the disclosure. Therefore, it will be apparent to those skilled in the art that the following description of various implementations of the disclosure is provided only for the purpose of description, not for the purpose of limiting the disclosure defined as the scope of the claims and equivalent thereto.

The singular forms "a," "an," and "the" are intended to include the plural forms as well, unless the context clearly indicates otherwise. Thus, as an example, "a component surface" may be interpreted as including one or more of the surfaces of a component.

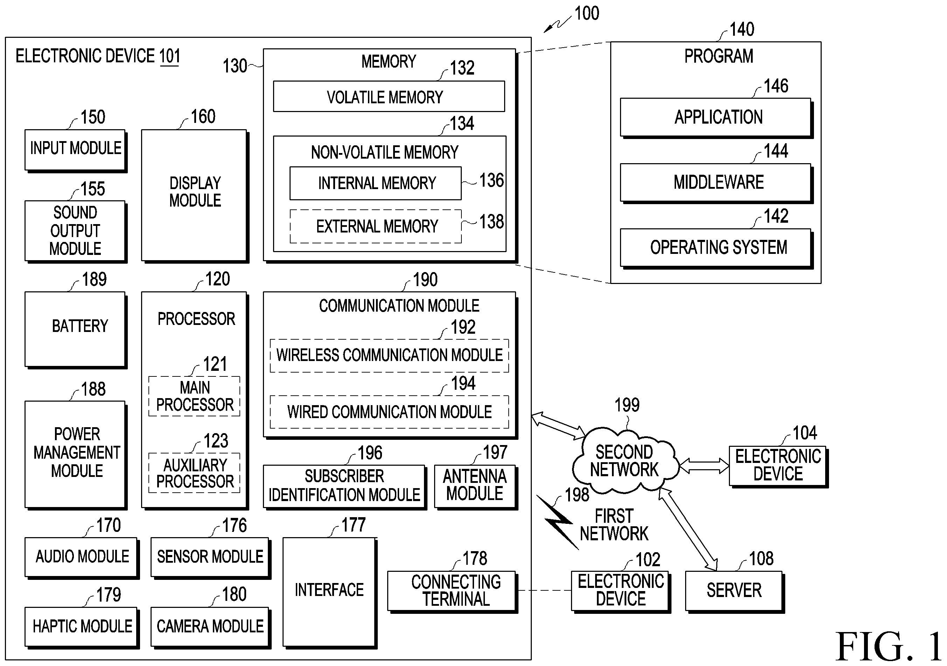

FIG. 1 is a block diagram illustrating an electronic device 101 in a network environment 100 according to an embodiment of the disclosure. Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via a first network 198 (e.g., a short-range communication network, such as BluetoothTM, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module may include an antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

The electronic device according to an embodiment of the disclosure may be one of various types of devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program) including one or more instructions that are stored in a storage medium (e.g., internal memory or external memory) that is readable by a machine (e.g., the electronic device). For example, a processor (e.g., the processor) of the machine (e.g., the electronic device) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play StoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

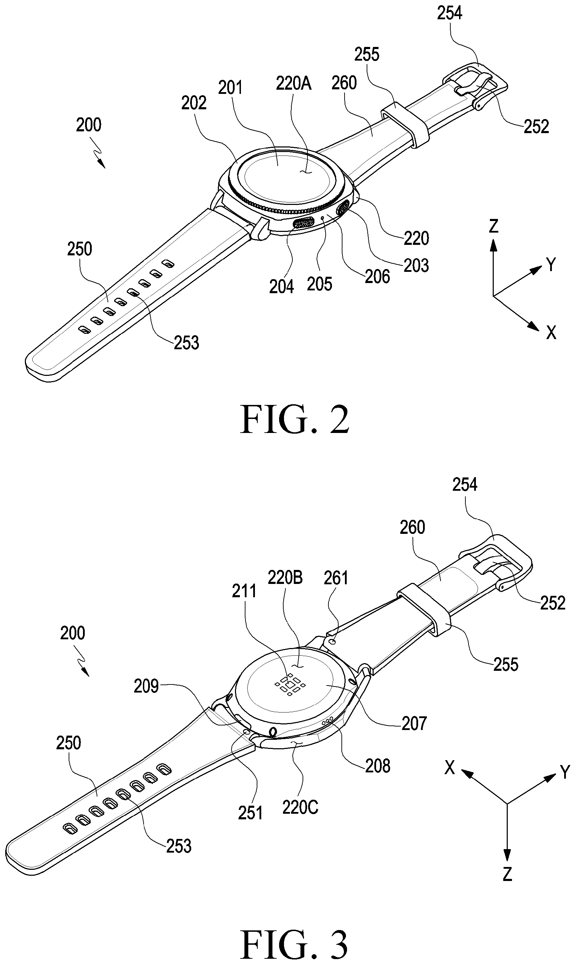

FIG. 2 is a front perspective view illustrating an electronic device 200 (e.g., the electronic device 101, 102, or 104 of FIG. 1) according to an embodiment of the disclosure. FIG. 3 is a rear perspective view illustrating the electronic device 200 of FIG. 2 according to an embodiment of the disclosure.

In the following detailed description with reference to FIGS. 2 to 4, the `width direction or length direction of the electronic device 200 or the housing 220' may be any one of the X-axis direction and the Y-axis direction of the illustrated orthogonal coordinate system. When it is necessary to distinguish the width direction or the length direction, the direction of the orthogonal coordinate system illustrated in the drawings may be labeled together. In the orthogonal coordinate system of FIGS. 2 to 4, the 'Z-axis direction' may mean a thickness direction of the electronic device 200 or the housing 220. In an embodiment, the direction in which the front surface (e.g., the first surface 220A of FIG. 2) of the electronic device 200 or the housing 220 faces may be defined as a 'first direction' or a '+Z direction', and the direction in which the rear surface (e.g., the second surface 220B of FIG. 3) of the electronic device 200 or the housing 220 faces may be defined as a 'second direction' or a '-Z direction'.

Referring to FIGS. 2 and 3, the electronic device 200 according to an embodiment may include a housing 220 including a first surface (or a front surface) 220A, a second surface (or a rear surface) 220B, and a side surface 220C surrounding a space between the first surface 220A and the second surface 220B and wearing members 250 and 260 connected to at least a portion of the housing 220 and configured to allow the electronic device 200 or the housing 220 to be worn on the user's body part (e.g., a wrist or ankle). According to another embodiment (not shown), the housing may denote a structure forming part of the first surface 220A, the second surface 220B, and the side surfaces 220C of FIG. 2. According to an embodiment, at least part of the first surface 220A may have a substantially transparent front plate 201 (e.g., a glass plate or polymer plate including various coat layers). The second surface 220B may be formed by a rear plate 207 that is preferably substantially opaque. According to an embodiment, when the electronic device may include a sensor module 211 disposed on the second surface 220B, the rear plate 207 may at least partially include a transparent area. The rear plate 207 may be formed of, e.g., laminated or colored glass, ceramic, polymer, metal (e.g., aluminum, stainless steel (STS), or magnesium), or a combination of at least two thereof. The side surface 220C may be formed by a side bezel structure (or a "side member") 206 that couples to the front plate 201 and the rear plate 207 and/or includes a metal and/or polymer. According to an embodiment, the rear plate 207 and the side bezel plate 206 may be integrally formed together and include the same material (e.g., a metal, such as aluminum). The wearing members 250 and 260 may be formed of various materials in various shapes. A uni-body structure or multiple unit links which is flexible may be formed of fabric, leather, rubber, urethane, metal, ceramic, or a combination of at least two thereof.

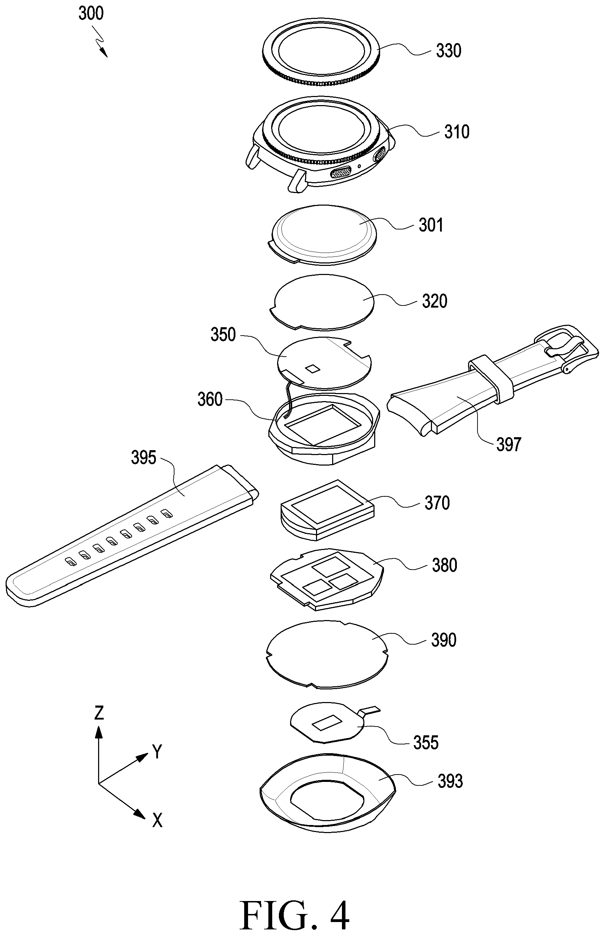

According to an embodiment, the electronic device 200 may include at least one or more of a display 320 (refer to FIG. 4), audio modules 205 and 208, a sensor module 211, key input devices 202, 203, and 204, and a connector hole 209. According to an embodiment, the electronic device 200 may exclude at least one (e.g., the key input devices 202, 203, and 204, connector hole 209, or sensor module 211) of the components or may add other components.

The display (e.g., the display 320 of FIG. 4) may be exposed through a significant portion of the front plate 201. The display 320 may have a shape corresponding to the shape of the front plate 201, e.g., a circle, ellipse, or polygon. The display 320 may be coupled with, or disposed adjacent, a touch detection circuit, a pressure sensor capable of measuring the strength (pressure) of touches, and/or fingerprint sensor.

The audio modules 205 and/or 208 may include a microphone hole 205 and/or a speaker hole 208. The microphone hole 205 may have a microphone inside to obtain external sounds. According to an embodiment, there may be a plurality of microphones to be able to detect the direction of a sound. The speaker hole 208 may be used for an external speaker or a receiver for phone talks. According to an embodiment, a speaker may be included without the speaker hole (e.g., a piezo speaker).

The sensor module 211 may produce an electrical signal or data value corresponding to the internal operation state or external environment state of the electronic device 200. The sensor module 211 may include, e.g., a biometric sensor module (e.g., a heart-rate monitor (HRM) sensor) disposed on the second surface 220B of the housing 220. The electronic device 200 may include a sensor module not shown, e.g., at least one of a gesture sensor, a gyro sensor, a barometric sensor, a magnetic sensor, an acceleration sensor, a grip sensor, a color sensor, an infrared (IR) sensor, a biometric sensor, a temperature sensor, a humidity sensor, or an illuminance sensor.

The key input devices 202, 203, and 204 may include a wheel key 202 disposed on the first surface 220A of the housing 220 to be rotatable in at least one direction and/or one or more key buttons 203 and 204 disposed on the side surface 220C of the housing 220. The wheel key 202 may have a shape corresponding to the shape of the front plate 201. According to an embodiment, the electronic device 200 may exclude all or some of the above-mentioned key input devices 202, 203, and 204 and the excluded key input devices 202, 203, and 204 may be implemented in other forms, e.g., as soft keys on the display 320. The connector hole 209 may receive a connector (e.g., a universal serial bus (USB) connector) for transmitting and receiving power and/or data to/from an external electronic device. Another connector hole (not shown) may be included for receiving a connector for transmitting and receiving audio signals to/from the external electronic device. The electronic device 200 may further include a connector cover (not shown) to cover at least part of, e.g., the connector hole 209 and preventing undesirable materials from entering the connector hole.

The wearing members 250 and 260 may detachably be fastened to at least portions of the housing 220, e.g. via locking members 251 and 261. The locking members 251 and 261 may include components or parts for coupling, such as pogo pins, and, according to an embodiment, may be replaced with protrusions or recesses formed on/in the wearing members 250 and 260. For example, the wearing members 250 and 260 may be coupled in such a manner as to be fitted into or over the recesses or protrusions formed on the housing 220. The wearing members 250 and 260 may include one or more of a fastening member 252, fastening member coupling holes 253, a band guide member 254, and a band fastening ring 255.

The fastening member 252 may be configured to allow the housing 220 and the wearing members 250 and 260 to be fastened to the user's body portion (e.g., wrist or ankle). The fastening member coupling holes 253 may fasten the housing 220 and the wearing members 250 and 260 to the user's body portion, corresponding to the fastening member 252. The band guide member 254 may be configured to restrict movement of the fastening member 252 to a certain range when the fastening member 252 fits into one of the fastening member coupling holes 253, thereby allowing the wearing members 250 and 260 to be selectively tightly fastened onto the user's body portion. The band fastening ring 255 may limit the range of movement of the wearing members 250 and 260, with the fastening member 252 fitted into one of the fastening member coupling holes 253.

FIG. 4 is an exploded perspective view illustrating the electronic device of FIG. 2 according to an embodiment of the disclosure.

Referring to FIG. 4, an electronic device 300 may include a side bezel structure 310, a wheel key 330, a front plate 301 (e.g., the front plate 201 of FIG. 2), a display 320 (e.g., the display module 160 of FIG. 1), a first antenna 350, a second antenna (e.g., the antenna included in the auxiliary circuit board 355), a supporting member 360 (e.g., a bracket), a battery 370 (e.g., the battery 189 of FIG. 1), a printed circuit board 380, a sealing member 390, a rear plate 393, and wearing members 395 and 397 (e.g., the wearing members 250 and 260 of FIG. 2). At least one of the components of the electronic device 300 may be the same or similar to at least one of the components of the electronic device 200 of FIG. 2 or 3 and no duplicate description is made below. The supporting member 360 may be disposed inside the electronic device 300 to be connected with the side bezel structure 310 or integrated with the side bezel structure 310. The supporting member 360 may be formed of, e.g., a metal and/or non-metallic material (e.g., polymer). The display 320 may be joined onto one surface of the supporting member 360, and the printed circuit board 380 may be joined onto the opposite surface of the supporting member 360. A processor, memory, and/or interface may be mounted on the printed circuit board 380. The processor may include one or more of, e.g., a central processing unit, an application processor, a graphic processing unit (GPU), a sensor processor, or a communication processor.

The memory may include, e.g., a volatile or non-volatile memory. The interface may include, e.g., a high definition multimedia interface (HDMI), a universal serial bus (USB) interface, a secure digital (SD) card interface, and/or an audio interface. The interface may electrically or physically connect, e.g., the electronic device 300 with an external electronic device and may include a USB connector, an SD card/multimedia card (MMC) connector, or an audio connector.

The battery 370 may be a device for supplying power to at least one component of the electronic device 300. The battery 370 may include, e.g., a primary cell which is not rechargeable, a secondary cell which is rechargeable, or a fuel cell. At least a portion of the battery 370 may be disposed on substantially the same plane as the printed circuit board 380. The battery 370 may be integrally or detachably disposed inside the electronic device 300.

The first antenna 350 may be disposed, in particular disposed directly, between the display 320 and the supporting member 360. The first antenna 350 may include, e.g., a near-field communication (NFC) antenna, a wireless charging antenna, and/or a magnetic secure transmission (MST) antenna. The first antenna 350 may perform short-range communication with an external device, wirelessly transmit/receive power necessary for charging, or transmit magnetic-based signals including payment data or short-range communication signals. According to an embodiment of the present invention, an antenna structure may be formed by a portion or combination of the side bezel structure 310 and/or the supporting member 360.

The auxiliary circuit board 355 may be disposed between the printed circuit board 380 and the rear plate 393. The auxiliary circuit board 355 may include a second antenna, e.g., a near-field communication (NFC) antenna, a wireless charging antenna, and/or a magnetic secure transmission (MST) antenna. The auxiliary circuit board 355 may perform short-range communication with an external device, wirelessly transmit/receive power necessary for charging, or transmit magnetic-based signals including payment data or short-range communication signals, using the second antenna. According to another embodiment, an antenna structure may be formed of a portion or combination of the side bezel structure 310 and/or the rear plate 393. According to an embodiment, when the electronic device 300 (e.g., the electronic device 200 of FIGS. 2 and 3) includes a sensor module (e.g., the sensor module 211 of FIG. 2), the sensor circuit disposed on the auxiliary circuit board 355 or a sensor element (e.g., a photoelectric conversion element or an electrode pad) separate from the auxiliary circuit board 355 may be disposed. For example, an electronic component provided as the sensor module 211 may be disposed, in particular disposed directly, between the printed circuit board 380 and the rear plate 393.

The sealing member 390 may be positioned between the side bezel structure 310 and the rear plate 393. The sealing member 390 may be configured to block moisture or foreign bodies that may enter the space surrounded by the side bezel structure 310 and the rear plate 393, from the outside.

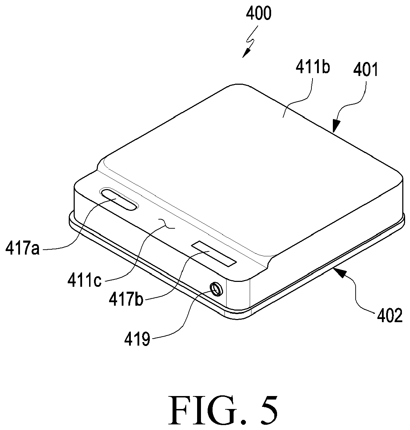

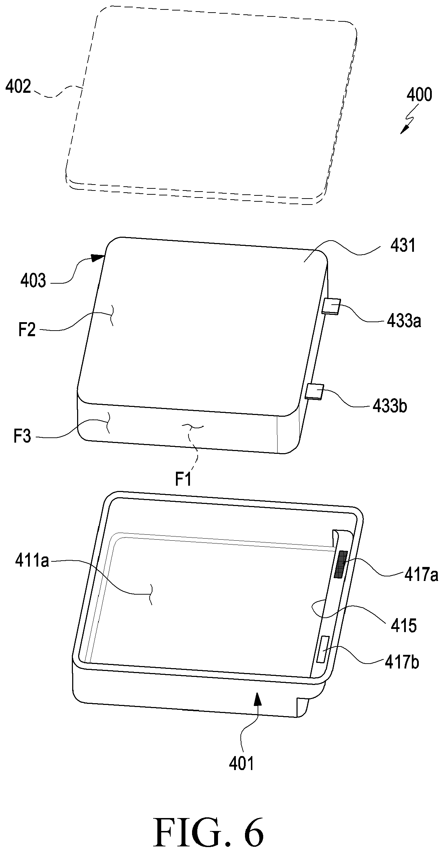

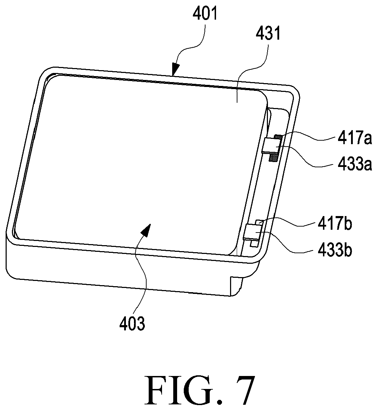

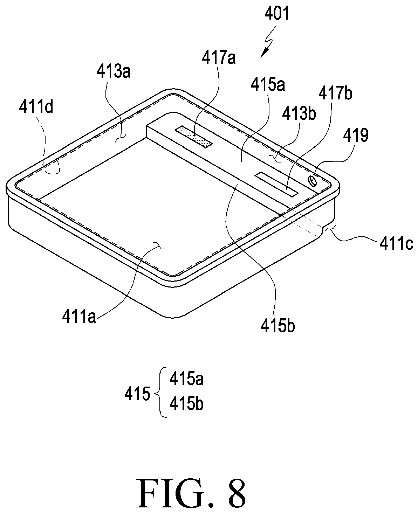

FIG. 5 is a perspective view illustrating a battery pack 400 according to an embodiment of the disclosure. FIG. 6 is an exploded perspective view illustrating a battery pack 400 according to an embodiment of the disclosure. FIG. 7 is a perspective view illustrating a state in which a battery cell 403 is disposed in a first casing 401 in a battery pack 400 according to an embodiment of the disclosure. FIG. 8 is a perspective view illustrating a first casing 401 of a battery pack 400 according to an embodiment of the disclosure.

Referring to FIGS. 5 to 8, a battery pack 400 may be, e.g., the battery 189 or 370 of FIG. 1 or 4, and includes a first casing 401, a second casing 402, a battery cell 403, and/or an electrode tab(s) 433a and 433b extending from the battery cell 403. In the embodiment described later, although for convenience of description it may be referred to as a separate configuration from the battery cell (403), the electrode tab 433a or 433b may be understood as part of the battery cell 403. In an embodiment, the electrode tab 433a or 433b may be disposed between a stepped portion 415 (e.g., a structure protruding from the inner surface 411a or the inner wall surface 413a or 413b of the first casing 401) and the second casing 402. In an embodiment, the first inner surface 411a may define at least a part of a space for accommodating the electrode assembly 431 of the battery cell 401, and it may be understood that the stepped portion 415 is substantially disposed at one side of the first inner surface 411a. In an embodiment, the electrode tab 433a or 433b may remain in substantially the same shape before and after the battery cell 403 is assembled in the inner space of the first casing 401 (and/or second casing 402).

According to an embodiment, when defining that the electrode tabs 433a and 433b extend in the first direction, any one surface of the electrode tabs 433a and 433b may be disposed to face the electrode terminal(s) 417a or 417b to be described later in a second direction crossing the first direction. For example, the electrode tabs 433a and 433b may be electrically connected while mechanically bonded to the electrode terminal(s) 417a or 417b by welding or soldering. The electrode tabs 433a and 433b may be maintained in a substantially straight line shape or flat plate shape in the state of being bonded to the electrode terminal(s) 417a or 417b. Here, the term "straight line shape" or "flat plate shape" may refer to a shape when the electrode tabs 433a and 433b are disposed parallel to the first inner surface 411a or a shape when the electrode tabs 433a are disposed obliquely at an angle within 10 degrees with respect to the first inner surface 411a. In an embodiment, when disposed inside the first casing 401, the other surfaces of the electrode tabs 433a and 433b may be disposed or aligned in a direction toward the inner surface 421 of the second casing 402.

According to an embodiment, in the operation in which the battery cell 403 is disposed or assembled in the inner space of the first casing 401, the electrode tab 433a or 433b may be disposed or coupled onto the stepped portion 415. "Electrode tab 433a or 433b is coupled onto the stepped portion 415" may be understood as the electrode tab 433a or 433b being electrically connected to another structure (e.g., the stepped portion 415 and/or the electrode terminal(s) 417a or 417b) while being simultaneously mechanically bonded to the other structure through a process, such as welding and/or soldering. For example, in the operation in which the battery cell 403 is received in the first casing 401, the electrode tab 433a or 433b may be aligned to the welding and/or soldering position. Thus, the operation of aligning the electrode tab 433a or 433b to the coupling position or deforming it is unnecessary, so that it may be easy to manufacture or assemble the battery pack 400. As the manufacturing process is simplified, the electrode tab 433a or 433b or the battery cell 403 may be prevented from damage or deformation, mitigating defects.

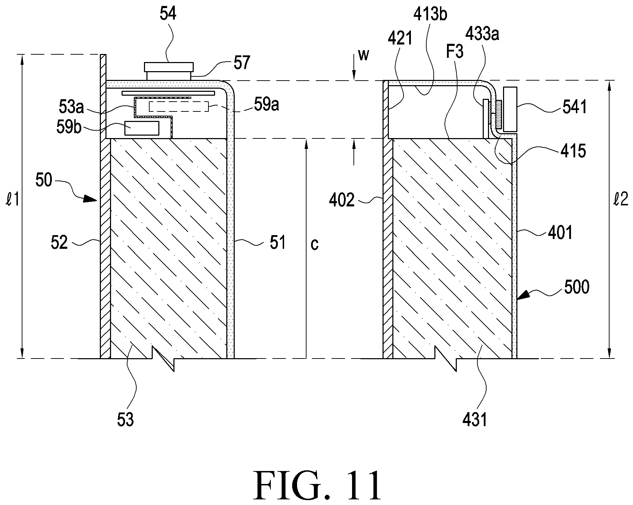

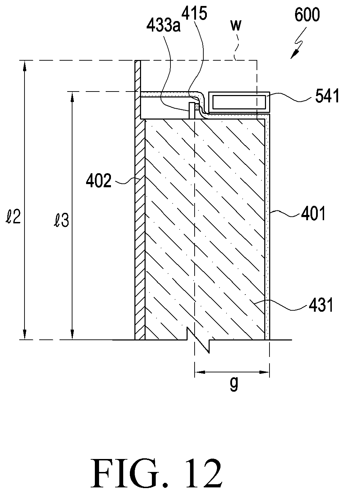

According to an embodiment, in the state coupled with the electrode terminal 417a or 417b, the electrode tab 433a or 433b may maintain the shape before coupled with the electrode terminal 417a or 417b. For example, a supporting structure for maintaining the shape of the electrode tab 433a or 433b in the first casing 401 and/or the second casing 402 may be unnecessary and may be omitted. Thus, deformation of the battery cell 403 (e.g., the electrode tab 433a or 433b) before and after the battery cell 403 is assembled in the inner space of the first casing 401 (and/or second casing 402) may be suppressed. For example, according to an embodiment of the disclosure, the battery pack 400 may be useful to increase the power capacity in the space provided by the first casing 401 and/or the second casing 402. In an embodiment, when the power capacity of the battery pack 400 is the same, the battery pack 400 may be downsized as much as the volume of the structure for remaining in shape. For example, according to an embodiment(s) of the disclosure, the battery pack 400 may contribute to a decrease in the size of the electronic device. The power capacity or downsizing of the battery pack 400 is described below in greater detail with reference to an embodiment(s) of FIG. 11 or 12.

According to an embodiment, the first casing 401 may be understood as, e.g., a protection member and may include a first inner surface 411a and inner wall surfaces 413a and 413b. The inner wall surfaces 413a and 413b may extend from the edge of the first inner surface 411a in a direction crossing the first inner surface 411a and form one open face 411d at a designated height from the first inner surface 411a. The open face 411d may be understood as an open side of the first casing 401 or an opening substantially completely extending along a surface of the first casing 401 opposite to the first inner surface 411a. For example, the first casing 401 may have a container shape including one open face 411d, such as a can or a cup. It should be noted that in the illustrated embodiment, the first casing 401 has a generally hexahedral shape as an example, but an embodiment(s) of the disclosure is not limited thereto. For example, the first casing 401 may be manufactured in a circular/polygonal cylinder shape or a flat shape, such as a coin. In an embodiment, the first casing 401 (e.g., the first inner surface 411a and the inner wall surfaces 413a and 413b) may provide a space for substantially receiving the battery cell 403. In other words, the first casing 401 may be of a shape capable of tightly receiving a battery cell 403 having a predetermined shape, e.g. a standardized shape.

According to an embodiment, the second casing 402 may be understood as a cap, a cover, or a lid, and may have a flat plate shape. However, the embodiment(s) of this disclosure are not limited thereto, the second casing 402 may have a container shape including an open side, similar to the first casing 401. In an embodiment, the second casing 402 may be coupled to the first casing 401 to seal an inner space of the first casing 401. For example, the battery cell 403 or the space receiving the battery cell 403 may be substantially sealed such that the second casing 402 is coupled to the first casing 401. For example, the second casing 402 may include a second inner surface 421 (refer to FIG. 11) disposed to face the first inner surface 411a. In other words, the second inner surface 421 may be arranged opposite to the first inner surface 411a. In an embodiment, as the second casing 402 is coupled to the open face 411d of the first casing 401, with the second inner surface 421 facing the first inner surface 411a, the inner space of the first casing 401 may be sealed. According to an embodiment, the second casing 402 may be welded to the first casing 401 at the edge of the open face 411d and/or the upper end of the inner wall surface(s) 413a or 413b. For example, as the second casing 402 is bonded to the first casing 401, the inner space of the first casing 401 may be sealed.

According to an embodiment, the stepped portion 415 may have a shape protruding from at least a portion of the inner wall surfaces 413a and 413b to the inner space of the first casing 401. In an embodiment, the stepped portion 415 may be described as a "shape extending substantially parallel to the first inner surface 411a from at least a portion of the inner wall surfaces 413a and 413b" or a "shape extending substantially parallel to at least a portion of the inner wall surfaces 413a and 413b from at least a portion of the first inner surface 411a". For example, the stepped portion 415 may be understood as being substantially disposed in an inner space of the first casing 401, and in an embodiment, the stepped portion 415 may be understood as a part of the first casing 401. In an embodiment, the first casing 401 is formed through a process of bending a metal plate or a polymer plate, and a groove (e.g., a seating recess 411c) may be implemented outside the first casing 401 corresponding to the stepped portion 415.

According to an embodiment, the stepped portion 415 may provide a first stepped area 415a stepped with respect to the firs inner surface 411a and/or a second stepped area 415b stepped with respect to a portion or any one (e.g., the inner wall surface indicated by '413') of the inner wall surfaces 413a and 413b. For example, the first stepped area 415a may extend from the inner wall surface indicated by '413b' and be disposed substantially parallel to the first inner surface 411a, and the second stepped area 415b may extend from the first inner surface 411a and be disposed substantially parallel to the inner wall surface indicated by '413b'. It may be understood that "substantially parallel to a designated plane or designated structure" includes a state in which the designated plane or designated structure is placed at an angle of approximately 10 degrees or less. In an embodiment, the second stepped area 415b may be understood as an area aligned in a direction inclined or crossing the first stepped area 415a. In an embodiment, the second stepped area 415b may be understood as a surface extending between the first stepped area 415a and the first inner surface 411a. The first stepped area 415a may be understood as, for example, a surface on which the electrode terminals 417a and 417b are disposed. In an embodiment, the first stepped area 415a may be understood as part of the first inner surface 411a while being substantially parallel to another area of the first inner surface 411a, and/or the second stepped area 415b may be understood as part of the inner wall surface indicated by '413b' while being substantially parallel to another area of the corresponding inner wall surface.

In an embodiment, the electrode tabs 433a and 433b may be disposed on the first stepped area 415a. When the electrode tabs 433a and 433b are disposed on a region (e.g., the first stepped area 415a) substantially parallel to the first inner surface 411a, one side surface of the battery cell 403 (e.g., the electrode assembly 431) may be disposed adjacent to the second stepped area 415b. In an embodiment, the second stepped area 415b can be disposed to directly face one side (e.g., a part of the outer wall surface F3) of the electrode assembly 431. For example, when the battery cell 403 is placed inside the first casing 401, the second stepped area 415b may function as a structure that inhibits the battery cell 403 or the electrode assembly 431 from moving inside the first casing 401. In an embodiment, the first stepped area 415a may be disposed to face the inner surface of the second casing 402.

According to an embodiment, the first stepped area 415a may be disposed closer to the second casing 402 (e.g., the second inner surface 421) than the first inner surface 411a. For example, a gap between the first stepped area 415a and the second inner surface 421 may be smaller than a gap between the first inner surface 411a and the second inner surface 421. In an embodiment, the first inner surface 411a may be a region substantially facing the first main surface F1 of the battery cell 403, and when the battery cell 403 is accommodated in the first casing 401, the electrode tabs 433a and 433b may be disposed on the first stepped area 415a. For example, any one surface of the electrode tabs 433a and 433b may be disposed to directly face the first stepped area 415a. Accordingly, in a state in which the battery cell 403 is disposed on the first inner surface 411a, the electrode tabs 433a and 433b may be disposed between the stepped portion 415 and the second inner surface 421 while maintaining the alphabet 'I' shape.

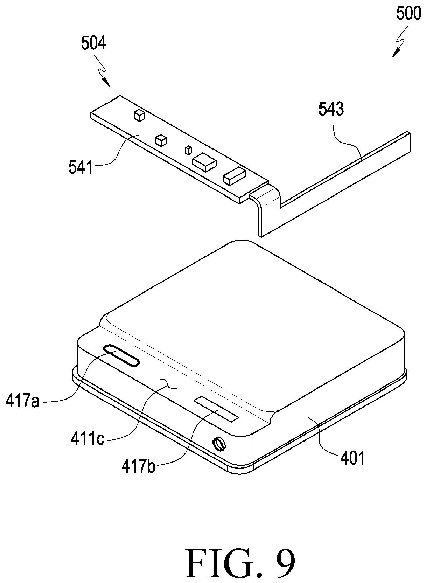

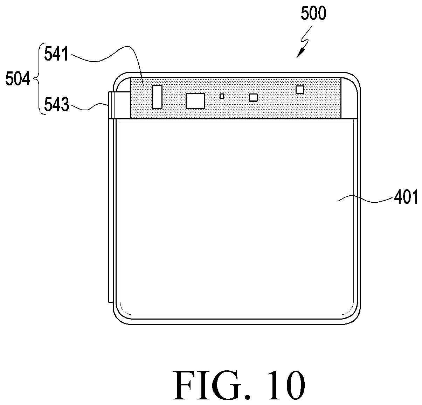

According to an embodiment, the first casing 401 may further include a seating recess 411c formed in the outer surface 411b. The outer surface 411b may be a surface of the first casing 401 being the opposite surface of the first inner surface 411a. For example, the seating recess 411c may be implemented such that a part of the outer surface 411b of the first casing 401. In other words, the seating recess 411c may be understood as a portion of the outer surface 411b. In an embodiment, the seating recess 411c may be disposed at least partially corresponding to the stepped portion 415. For example, the seating recess 411c corresponding to the size or shape of the stepped portion 415 may be formed outside the first casing 401. In an embodiment, at least a portion of the substrate assembly (e.g., the substrate assembly 504 of FIG. 9) may be disposed in the seating recess 411c, and this is described through the embodiment of FIG. 9 and/or 10. That is, the seating recess 411c may be configured to receive at least a portion of the substrate assembly. Preferably, the substrate assembly is completely disposed in the seating recess 411c.

According to an embodiment, the battery pack 400 and/or the first casing 401 may further include an (one or more) electrode terminal(s) 417a or 417b. The electrode terminal 417a or 417b may be configured to provide an electrical connection between the inner space and the outside of the first casing 401. A portion of the electrode terminal 417a or 417b may be exposed to the inner space of the first casing 401 and another portion may be exposed to the outside of the first casing 401. For example, the electrode terminal(s) 417a or 417b may be electrically connected with the battery cell 403 inside the first casing 401, providing charging power to the battery cell 403 or supplying power from the battery cell 403 to the outside. In other words, the electrode terminal 417a or 417b may be disposed to extend through the first casing 401. In an embodiment, the electrode terminal 417a or 417b may be substantially disposed on the stepped portion 415 (and/or seating recess 411c). In other words, the electrode terminal 417a or 417b may be disposed to extend through the stepped portion 415 to the seating recess 411c of the first casing 401. In an embodiment, the electrode terminal 417a or 417b may be disposed on or buried in the stepped portion 415, with different portions thereof respectively exposed to the inside and outside of the first casing 401. According to an embodiment, the exposed portion of the electrode terminal 417a or 417b inside the first casing 401 may be substantially disposed in the area facing the second casing 402. The position, size, and/or shape of the electrode terminal 417a or 417b is not limited to that in the illustrated embodiment, but may be diversified depending on the design of the battery pack 400, as long as the electrode terminal 417a or 417b provides an electrical connection between the inner space and the outside of the first casing 401.

According to an embodiment, the battery cell 403 (e.g., the electrode assembly 431) may include a first main surface F1, a second main surface F2 facing in the direction opposite to the first main surface F1, and/or an outer wall surface(s) F3 connecting the second main surface F2 to the first main surface F1. Herein, 'the first surface (e.g., the outer surface F3) connects two different surfaces (e.g., the first main surface F1 and the second main surface F2)' may be understood as the first surface (e.g., the first main surface F1) among an outer surface of the electrode assembly 431 is arranged in a direction crossing the two different surfaces (e.g., the first main surface F1 and the second main surface F2) while including a state that edges of the first surface is in contact with the first main surface F1 and the second main surface F2.

In an embodiment, the first main surface F1 may be disposed to face the first inner surface 411a, the second main surface F2 may be disposed to face the second inner surface 421, and/or the outer wall surface F3 may be disposed to at least partially face the inner wall surface(s) 413a or 413b. In an embodiment, the stepped portion 415 may protrude from the inner wall surface(s) 413a and 413b to the battery cell 403 (e.g., the outer wall surface F3). For example, a portion of the outer wall surface F3 may be disposed to face at least a portion of the stepped portion 415. As described below, the electrode tab 433a or 433b may be disposed between the second casing 402 (e.g., the second inner surface 421) and the stepped portion 415, and the stepped portion 415 may be substantially disposed adjacent to the area, where the electrode tab 433a or 433b is disposed, of the outer wall surface F3. In the instant embodiment, for convenience of description, a configuration in which the first main surface F1 is disposed to face the first inner surface 411a is mentioned but, according to an embodiment, the surface facing the second inner surface 421 may be understood as the first main surface F1 of the battery cell 403.

According to an embodiment, the battery cell 403 may be disposed, in particular disposed directly, between the first casing 401 and the second casing 402, and the electrode tab 433a or 433b may be disposed, in particular disposed directly, between the second casing 402 (e.g., the second inner surface 421) and the stepped portion 415. The electrode tab 433a or 433b may extend from the outer wall surface F3 of the battery cell 403 exposed to the space between the second inner surface 421 and the stepped portion 415 to the inner wall surface 413b.

According to an embodiment, when the battery cell 403 is received in the first casing 401, and the second casing 402 is coupled to the first casing 401, the electrode tab 433a or 433b may be substantially aligned with the electrode terminal 417a or 417b. In other words, the battery cell 403 received in the first casing 401 may be electrically connected with the outside of the first casing 401 via the electrode tab 433a or 433b and the electrode terminal 417a or 417b. For example, the electrode tab 433a or 433b may extend from the battery cell 403 (e.g., the outer wall surface F3) and be disposed to face the electrode terminal 417a or 417b between the second casing 402 (e.g., the second inner surface 421) and the stepped portion 415. In an embodiment, the electrode tab 433a or 433b may be coupled onto the stepped portion 415, e.g., the electrode terminal 417a or 417b. As mentioned above, that the "electrode tab 433a or 433b is coupled to XX" may be understood as being electrically connected to XX while being simultaneously mechanically bonded to XX, and the electrode tab 433a or 433b may be coupled to the electrode terminal 417a or 417b by welding or soldering.

According to an embodiment, when coupled to the electrode terminal 417a or 417b, the electrode tab 433a or 433b may be substantially parallel to the first casing 401 (e.g., the first inner surface 411a) or the second casing 402 (e.g., the second inner surface 421). "Substantially parallel" may be understood as including a state inclined within about 10 degrees, preferably about 5 degrees. For example, the electrode tab 433a or 433b may be designed to be parallel to the first inner surface 411a and/or the second inner surface 421 in the state coupled with the electrode terminal 417a or 417b, and the electrode tab 433a or 433b may be disposed to be inclined at least partially with respect to the first inner surface 411a and/or the second inner surface 421 within a designated angular range depending on the manufacture or assembly tolerance of each component(s). The disposition of the electrode tab 433a or 433b is described again with reference to FIG. 11.

According to an embodiment, although not shown, the battery cell 403 may include the electrode assembly 431 including a positive electrode(s) and a negative electrode(s) alternately stacked and a separator(s) disposed between the positive electrode and the negative electrode. The battery cell 403 or the battery pack 400 may be classified as a jelly-roll type or a stacked type depending on the aligned shape of the positive electrode and negative electrode in the electrode assembly 431. The battery pack 400 and/or battery cell 403 may include an electrode tab 433a extending from the positive electrode(s) and an electrode tab 433b extending from the negative electrode(s). For example, the electrode tab indicated by '433a' is implemented such that tabs extending from corresponding one of the positive electrodes are coupled together or connected to each other. In an embodiment, the electrode tab indicated by '433b' is implemented such that tabs extending from corresponding one of the negative electrodes are coupled together or connected to each other. In an embodiment, according to the movement of electrons between the positive electrode and the negative electrode, the battery pack 400 may be charged or discharged. In an embodiment, the battery pack 400 may contain an electrolyte to smooth the movement of electrons between the positive electrode and the negative electrode. In an embodiment, the electrolyte may be injected into the first casing 401 in a state in which the battery cell 403 and/or the second casing 402 is disposed or assembled in the first casing 401. According to an embodiment, the battery pack 400 and/or the first casing 401 may further include a dummy hole 419. The dummy hole 419 may function as a hole for injecting the electrolyte, e.g., in a state in which the second casing 402 is assembled in the first casing 401. After the electrolyte is injected, the dummy hole 419 may be closed or sealed. The position, size, and/or shape of the dummy hole 419 is not limited to that in the illustrated embodiment, but may be diversified depending on the design of the battery pack 400.

FIG. 9 is an exploded perspective view illustrating a battery pack 500 according to an embodiment of the disclosure. FIG. 10 is a view illustrating a battery pack 500 according to an embodiment of the disclosure.

In the configuration or disposition of the first casing 401, the second casing 402, and/or the battery cell 403, the battery pack 500 of FIGS. 9 and 10 may be substantially the same as the battery pack 400 of FIGS. 5 to 8. In describing the battery pack 500 according to the instant embodiment, the components easy to understand from the description of the above embodiment are denoted with the same reference numerals or omitted, and their detailed description may be skipped.

Referring to FIGS. 9 and 10, the electrode terminal(s) 417a or 417b may be partially exposed to the outside of the first casing 401. For example, the above-described electrode terminal 417a or 417b may substantially provide charging power to the battery cell 403 or transfer the power from the battery cell 403 to other components (e.g., the components shown in FIG. 1) of the electronic device (e.g., the electronic devices 101, 102, 104, 200, and 300 of FIGS. 1 to 4). In an embodiment, the electrode terminal 417a or 417b may be at least partially disposed, in particular directly disposed, on the seating recess 411c. For example, as the electrode terminal 417a or 417b is buried in the first casing 401, a portion of the electrode terminal 417a or 417b may be exposed to the inside of the first casing 401 on the stepped portion (e.g., the stepped portion 415 of FIG. 8), and another portion of the electrode terminal 417a or 417b may be exposed to the outside of the first casing 401 on the seating recess 411c. In an embodiment, the electrode terminal indicated by reference number '417a' may be provided as an anode terminal, and the first casing (401) may function as a cathode (or cathode terminal). When the first casing 401 functions as a cathode, an insulating structure may be provided between the electrode terminal 417a and the first casing 401.

According to an embodiment, the battery pack 500 may further include a substrate assembly 504. The substrate assembly 504 may include a circuit for controlling the charge or discharge of the battery pack 500, e.g., as a charge protection circuit. In an embodiment, the substrate assembly 504 may control the charge or discharge according to the signal or command provided from the processor (e.g., the processor 120 of FIG. 1) or power management module (e.g., the power management module 188 of FIG. 1). In an embodiment, the charge protection circuit of the substrate assembly 504 may be understood as part of the processor or power management module.

According to an embodiment, the substrate assembly 504 may include a base substrate 541 and a connection substrate 543. The base substrate 541 may have electric/electronic components, such as passive elements, active elements, and/or integrated circuit chips, mounted thereon and/or may be disposed, in particular directly disposed, on the seating recess 411c. Although not shown, the base substrate 541 may include contact terminals, such as leaf springs, C-clips, and/or pogo pins, and/or may be electrically connected with the electrode terminal 417a or 417b through the contact terminal. For example, the substrate assembly 504 (e.g., the base substrate 541) is electrically connected to the electrode tabs 433a and 433b and/or the batter cell 403 via the electrode terminal 417a or 417b. The connection substrate 543 may extend from, e.g., the base substrate 541 and may be coupled to the main circuit board (e.g., the printed circuit board 380 of FIG. 4). In an embodiment, the substrate assembly 504 may be implemented substantially as part of the main circuit board. In the example in which the substrate assembly 504 is implemented as part of the printed circuit board 380, the base substrate 541 may be omitted, and the connection substrate 543 may directly connect the electrode terminal 417a or 417b to the printed circuit board 380.

According to an embodiment, the connection substrate 543 may be a type of flexible printed circuit board and/or the base substrate 541 may be a flexible printed circuit board or rigid printed circuit board. Preferably, the base substrate 541 may be configured to be less flexible than the connection substrate 543. In an embodiment, when the base substrate 541 is a flexible printed circuit board, it may include more layers or more films than the connection substrate 543 and may thus be less flexible than the connection substrate 543. For example, the layers or films of the connection substrate 543 may substantially extend from some layers or some films of the base substrate 541. In an embodiment, the base substrate 541 may be implemented to have substantially the same number of layers or films as the connection substrate 543. When the base substrate 541 and the connection substrate 543 includes the same number of layers, e.g., the same degree of flexibility, the substrate assembly 504 may further include a supporting plate to support the base substrate 541, thereby keeping the base substrate 541 in the flat shape.

According to an embodiment, the connection substrate 543 may be more flexible than the base substrate 541 and may be deformed to be curved into a proper shape along the wiring path provided inside the electronic device (e.g., the electronic devices 200 and 300 of FIGS. 2 to 4). For example, in the shape of an actually manufactured one, the connection substrate 543 may be manufactured in a shape forming a flat plate with the base substrate 541 and may be disposed to be at least partially inclined or vertically with respect to the base substrate 541 inside the electronic device.

FIG. 11 is a view illustrating comparison between battery packs 50 and 500 according to embodiments of the disclosure. FIG. 12 is a view illustrating a battery pack 600 according to an embodiment of the disclosure.

In describing an embodiment(s) of FIG. 11, the battery pack indicated by reference number '50' may be denoted as a first battery pack, and the battery pack indicated by reference number '500' may be denoted as a second battery pack. The second battery pack 500 may be, e.g., any one of the battery 370 of FIG. 4 or the battery packs 400 and 500 of FIGS. 5 to 10. In the configuration of the first battery pack 50 and the second battery pack 500, the battery cells 53 and 403 may have the same capacity c (e.g., same width, length, and/or thickness). In describing the battery packs 50 and 500 according to the instant embodiment, the components easy to understand from the description of the above embodiment are denoted with the same reference numerals or omitted, and their detailed description may be skipped.

Referring to FIGS. 11 and 12, in the first battery pack 50, the electrode tab 53a may be disposed in a curved shape in disposing the battery cell 53 between the first casing 51 and the second casing 52. For example, the electrode tab 53a may extend from the battery cell 53 in a first length 11 direction, disposed in a curved state inside the first casing 51, and coupled to an inner wall surface of the first casing 51 in a state of crossing the first length 11 direction. In receiving the electrode tab 53a and implementing the curved shape, a space indicated by 'w' (hereinafter, `receiving space w') may be provided inside the first battery pack 50. In an embodiment, although the electrode tab 53a of the first battery pack 50 is manufactured in the shape of the letter "I," it is deformed into a curved shape, so that it may be coupled (welded or soldered) in a state parallel to the inner wall surface of the first casing 51. In a state in which the electrode tab 53a is coupled to the inner wall surface of the first casing 51, the battery cell 53 is disposed in the first casing 51, so that the electrode tab 53a may be deformed into a curved shape. According to an embodiment, the first battery pack 50 may include a supporting structure 59a and/or an insulator 59b, leading to deformation of the electrode tab 53a into the designed shape while the battery cell 53 is assembled in the first casing 51.

According to an embodiment, in a state in which the electrode tab 53a is coupled to the inner wall surface of the first casing 51, the electrode terminal 57 of the first battery pack 50 may be partially exposed to the outside of the first casing 51. For example, when the first battery pack 50 includes a substrate assembly 54 (e.g., the base substrate 541 of FIG. 9), the substrate assembly 54 may be disposed on the outer wall surface of the first casing 51 (e.g., an upper end of the first casing 51 in the structure shown in FIG. 11). Such disposition of the substrate assembly 54 makes no contribution to the battery capacity and may substantially increase the volume (e.g., first height or first length l1) of the first battery pack 50.

According to an embodiment, considering the length of the electrode tab 53a and the elastic force or curved shape of the electrode tab 53a itself, in securing the space of disposing the supporting structure 59a or insulator 59b, it may be difficult to reduce the receiving space w in the first battery pack 50. For example, the receiving space w among the spaces provided by the first battery pack 50 may substantially cause loss of battery capacity (e.g., power capacity). In an embodiment, the space (receiving space w) for receiving the electrode tab 53a in a curved shape may have a similar size regardless of the size of the electronic device or the size of the battery pack (e.g., the first battery pack 50). For example, when the electronic device or battery pack is downsized, the efficiency of battery capacity relative to the battery pack volume may be further reduced due to the receiving space w.

According to an embodiment of the disclosure, in the battery 370 of FIG. 4 or the battery packs 400 and 500 (e.g., the second battery pack 500) of FIGS. 5 to 10 described above, the electrode tab 433a (e.g., the electrode tab 433a or 433b of FIG. 6) may be disposed in the inner space of the first casing 401 and/or second casing 402 while remaining substantially in the initial shape as manufactured (e.g., the shape of the letter "I") and may be disposed between the second casing 402 (e.g., the second inner surface 421) and the stepped portion 415 while being in contact with the stepped portion 415. According to an embodiment, the receiving space w of the second battery pack 500 corresponding to the receiving space w of the first battery pack 50 may be used as a space for coupling the electrode tab 433a onto the stepped portion 415 and/or a space for disposing a substrate assembly (e.g., the base substrate 541 of the substrate assembly 504 of FIG. 9). For example, the second battery pack 500 may have a second height or a second length l2, and the second length l2 may be smaller than the first length 11 by, e.g., the thickness or height of the substrate assembly 54 of the first battery pack 50.

According to an embodiment, as the second battery pack 500 has the second length l2 smaller than the first length l1 while receiving substantially the same battery capacity as the first battery pack 50, the second battery pack 500 may have battery capacity enhanced relative to the overall volume. In an embodiment, in a structure in which the first length 11 and the second length l2 are the same, the battery capacity of the second battery pack 500 may be larger than the battery capacity of the first battery pack 50. In an embodiment, the length at which the electrode tab 433a extends from the outer wall surface of the battery cell 403 or the size or shape of the base substrate 541 may be designed freely with respect to another structure. For example, in the second battery pack 500, the receiving space w may have a smaller size or shape than that of FIG. 11. In an embodiment, in design, the extended length of the electrode tab 433a may be selected as various ones considering the working space coupled (welded or soldered) onto the stepped portion 415 and the heat or external force transferred to the battery cell 403 in the process of coupling onto the stepped portion 415.

According to an embodiment, the electrode tab 433a may be disposed in a position spaced apart from the outer surface 411b (e.g., refer to FIG. 5) of the first casing 401 by a first gap g. In other words, the stepped portion 15 may correspond to a stepped portion of the first inner wall surface 413b, wherein the first gap g may define the distance of the stepped portion to the outer surface 411b. The distance defined by the first gap g may correspond to at least 25 percent, preferably at least 50 percent, of the length of the first inner wall surface 413b extending between the first casing 401 and the second casing 402. As the stepped portion 415 extends from the inner surface (e.g., the first inner surface 411a of FIG. 8) of the first casing 401 by the height substantially corresponding to the first gap g, the electrode tab 433a may be disposed substantially parallel to the outer surface or inner surface of the first casing 401. According to an embodiment, as the first gap g reduces, the electrode tab 433a may come closer to the outer surface of the first casing 401 and, as the first gap g increases, the electrode tab 433a may come closer to the open face (e.g., the surface indicated by '411d' of FIG. 8) of the first casing 401. According to an embodiment, the electrode tab 433a may be coupled onto the stepped portion 415 substantially in a state in which the battery cell 403 is received in the first casing 401. For example, the larger the first gap g is, the closer to the open face 411d the electrode tab 433a may come, so that the process of coupling onto the stepped portion 415 may be easier. In an embodiment, as compared with the shape shown in FIG. 11, when the first gap g increases, the seating recess 411c may be gradually enlarged in the direction of the first gap g, and the process of coupling the electrode tab 433a onto the stepped portion 415 may be easier.

According to an embodiment, when the seating recess 411c is gradually enlarged in the direction of the first gap g, the substrate assembly (e.g., the base substrate 541) of the second battery pack 500 may be disposed substantially parallel to the direction of the first gap g. In other words, the size of the first gap g may be chosen such that the seating recess 411c is configured to completely receive the base substrate 541 of the second battery pack 500. For example, when the seating recess 411c has a sufficient width or length in the direction of the first gap g, the base substrate 541 of the second battery pack 500 may be disposed at an upper end of the first casing 401, like in the first battery pack 50. As such, an example in which the base substrate 541 of the second battery pack 500 is disposed at an upper end of the first casing 401 is shown through the battery pack 600 of FIG. 12. In the battery pack 600 of FIG. 12, the dashed line indicated by 'w' may exemplify the receiving space of the second battery pack 500 of FIG. 11. As shown in FIG. 12, as the first gap g increases, the process of coupling the electrode tab 433a of the battery pack 600 onto the stepped portion 415 may be smoothly performed although the length of the electrode tab 433a is smaller than that in the second battery pack 500 of FIG. 11. As the length of the electrode tab 433a reduces and/or the seating recess 411c increases into a designated size in the direction of the first gap g, the direction of disposing the base substrate 541 may be designed to differ from that in the second battery pack 500 of FIG. 11. For example, a seating recess 411c for receiving the substrate assembly (e.g., the base substrate 541) may be provided outside the first casing 401 to correspond to the stepped portion 415 for coupling the electrode tab 433a. In an embodiment, the stepped portion 415 or seating recess 411c of the second battery pack 500 or the battery pack 600 of FIG. 12 may be substantially implemented using part of the receiving space w in the first battery pack 50 of FIG. 11. Thus, the second battery pack 500 of FIG. 11 or the battery pack 600 of FIG. 12 may have the same battery capacity as the first battery pack 50 of FIG. 11 while having a second length l2 or third length l3 smaller than the first length (e.g., the length 11 of the first battery pack of FIG. 11).

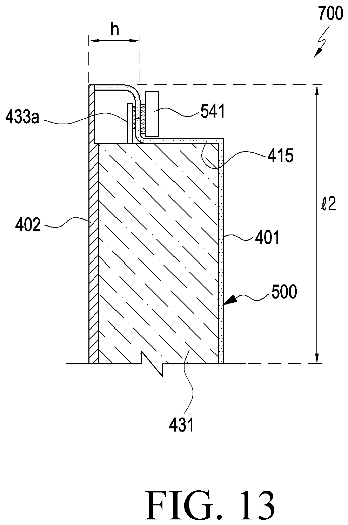

FIG. 13 is a view illustrating a battery pack 700 according to an embodiment of the disclosure.

As compared with the second battery pack 500 of FIG. 11, the battery pack 700 of FIG. 13 may have the electrode tab 433a disposed closer to the second casing 402. For example, in the battery pack 700 of FIG. 13, the receiving space w of FIG. 11 or 12 may be reduced into the size indicated by 'h' in the thickness direction, and the circuit board 541 may be disposed to be stepped from the outer surface of the first casing 401. The receiving space w shown in FIG. 11 or 12 is substantially a space where the electrode tab 433a is disposed, and the electrode tab 433a or electrode terminal (e.g., the electrode terminal 417a or 417b of FIG. 8) may be disposed closer to the open face (e.g., the surface indicated by '411d' of FIG. 8) of the first casing 401 as much as the receiving space w is reduced in the thickness direction. As the electrode tab 433a or the electrode terminal 417a or 417b is disposed close to the open face 411d of the first casing 401, welding or soldering may be facilitated. In an embodiment, the length of the electrode tab 433a may be larger than that in the battery pack 600 of FIG. 12 by disposing the circuit board 541 as in the second battery pack 500 of FIG. 11 while reducing the receiving space w in the thickness direction. For example, the battery pack 700 of FIG. 13 may have substantially the same battery capacity as the battery pack 600 of FIG. 12 and may have welding or soldering performed more easily. In an embodiment, the volume of the battery pack 700 may be smaller than the second battery pack 500 of FIG. 11 as much as the receiving space w is reduced in the thickness direction. For example, in implementing the downsized electronic device (e.g., the electronic devices 200 and 300 of FIGS. 2 to 4), it is possible to enhance integration or downsizing of the electronic device while keeping the battery capacity identical.

As such, the battery pack (e.g., the batteries 189 and 370 of FIGS. 1 and 4 or the battery packs 400, 500, and 600 of FIGS. 5, 6, 9, and 12) according to an embodiment(s) of the disclosure may be easy to downsize when the battery capacity (e.g., power capacity) is identical. In an embodiment, it is possible to easily increase the power capacity of the battery pack 700 according to an embodiment(s) of the disclosure when it remains in the same exterior size or volume. In an embodiment, the electrode tab (e.g., the electrode tab 433a or 433b of FIG. 6 or 11) may remain substantially in its initial shape as manufactured without deformation in the battery pack manufacturing or assembling process. For example, as the external force applied to the electrode tab in the manufacturing or assembling process is reduced, it is possible to reduce defects in manufacture of the battery pack.

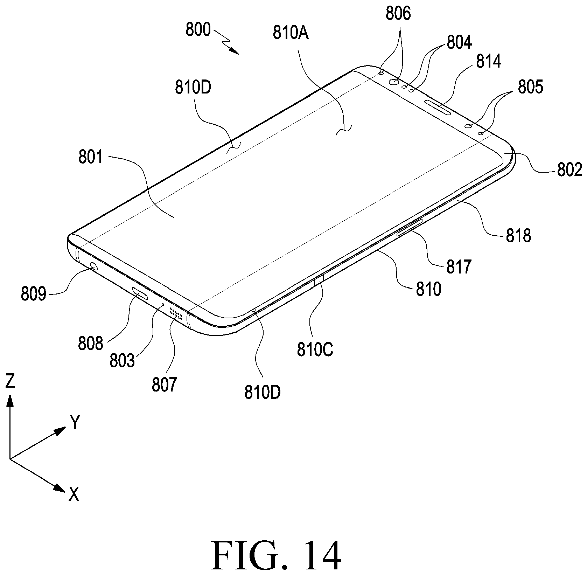

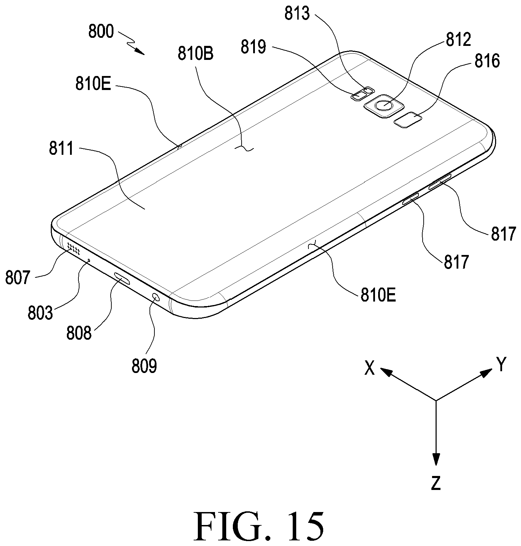

FIG. 14 is a front perspective view illustrating an electronic device 800 according to an embodiment of the disclosure. FIG. 15 is a perspective view illustrating a rear surface of the electronic device 800 of FIG. 14 according to an embodiment of the disclosure.

Referring to FIGS. 14 and 15, according to an embodiment, an electronic device 800 may include a housing 810 including a first surface (or front surface) 810A, a second surface (or rear surface) 810B, and a side surface 810C surrounding a space between the first surface 810A and the second surface 810B. In an embodiment (not shown), the housing may denote a structure forming part of the first surface 810A, the second surface 810B, and the side surfaces 810C. According to an embodiment, at least a part of the first surface 810A may have a substantially transparent front plate 802 (e.g., a glass plate or polymer plate including various coat layers). The second surface 810B may be formed by a rear plate 811 that is substantially opaque. The rear plate 811 may be formed of, e.g., laminated or colored glass, ceramic, polymer, metal (e.g., aluminum, stainless steel (STS), or magnesium), or a combination of at least two thereof. The side surface 810C may be formed by a side bezel structure (or a "side structure") 818 that couples to the front plate 802 and the rear plate 811 and includes a metal and/or polymer. In an embodiment, the rear plate 811 and the side structure 818 may be integrally formed together and include the same material (e.g., a metal, such as aluminum).

In the embodiment illustrated, the front plate 802 may include two first areas 810D, which seamlessly and bendingly extend from the first surface 810A to the rear plate 811, on both the long edges of the front plate 802. In the embodiment (refer to FIG. 15) illustrated, the rear plate 811 may include second areas 810E, which seamlessly and bendingly extend from the second surface 810B to the front plate 802, on both the long edges. In an embodiment, the front plate 802 (or the rear plate 811) may include only one of the first areas 810D (or the second areas 810E). In an embodiment, the first areas 810D or the second areas 810E may partially be excluded. According to embodiments, at side view of the electronic device 800, the side structure 818 may have a first thickness (or width) for sides that do not have the first areas 810D or the second areas 810E and a second thickness, which is smaller than the first thickness, for sides that have the first areas 810D or the second areas 810E.

According to an embodiment, the electronic device 800 may include at least one or more of a display 801, audio modules 803, 807, and 814, sensor modules 804, 816, and 819, camera modules 805, 812, and 813, key input devices 817, a light emitting device 806, and connector holes 808 and 809. In an embodiment, the electronic device 800 may exclude at least one (e.g., the key input device 817 or the light emitting device 806) of the components or may add other components.

The display 801 may be exposed through a significant portion of the front plate 802. In an embodiment, at least a portion of the display 801 may be exposed through the front plate 802 forming the first surface 810A and the first areas 810D of the side surface 810C. In an embodiment, the edge of the display 801 may be formed to be substantially the same in shape as an adjacent outer edge of the front plate 802. In an embodiment (not shown), the interval between the outer edge of the display 801 and the outer edge of the front plate 802 may remain substantially even to give a larger area of exposure the display 801.

In an embodiment (not shown), the screen display area of the display 801 may have a recess or opening in a portion thereof, and at least one or more of the audio module 814, sensor module 804, camera module 805, and light emitting device 806 may be aligned with the recess or opening. In an embodiment (not shown), at least one or more of the audio module 814, sensor module 804, camera module 805, fingerprint sensor 816, and light emitting device 806 may be included on the rear surface of the screen display area of the display 801. In an embodiment (not shown), the display 801 may be disposed to be coupled with, or adjacent, a touch detecting circuit, a pressure sensor capable of measuring the strength (pressure) of touches, and/or a digitizer for detecting a magnetic field-type stylus pen. In an embodiment, at least part of the sensor modules 804 and 819 and/or at least part of the key input devices 817 may be disposed in the first areas 810D and/or the second areas 810E.

The audio modules 803, 807, and 814 may include a microphone hole 803 and speaker holes 807 and 814. A microphone for acquiring external sounds may be disposed in the microphone hole 803. In an embodiment, a plurality of microphones may be disposed to detect the direction of the sound. The speaker holes 807 and 814 may include an external speaker hole 807 and a phone receiver hole 814. In an embodiment, the speaker holes 807 and 814 and the microphone hole 803 may be implemented as a single hole, or speakers may be rested without the speaker holes 807 and 814 (e.g., piezo speakers).

The sensor modules 804, 816, and 819 may generate an electrical signal or data value corresponding to an internal operating state or external environmental state of the electronic device 800. For example, the sensor modules 804, 816, and 819 may include a first sensor module 804 (e.g., a proximity sensor) and/or a second sensor module (not shown) (e.g., a fingerprint sensor), which is disposed on the first surface 810A of the housing 810, and/or a third sensor module 819 (e.g., a heartrate monitor (HRM) sensor) and/or a fourth sensor module 816 (e.g., a fingerprint sensor) disposed on the second surface 810B of the housing 810. The fingerprint sensor may be disposed on the second surface 810B as well as the first surface 810A (e.g., the display 801) of the housing 810. The electronic device 800 may further include sensor modules, e.g., at least one of a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, or an illuminance sensor.

The camera modules 805, 812, and 813 may include a first camera device 805 disposed on the first surface 810A of the electronic device 800, and a second camera device 812 and/or a flash 813 disposed on the second surface 810B. The camera devices 805 and 812 may include one or more lenses, an image sensor, and/or an image signal processor. The flash 813 may include, e.g., a light emitting diode (LED) or a xenon lamp. In an embodiment, two or more lenses (an infrared (IR) camera, a wide-angle lens, and a telescopic lens) and image sensors may be disposed on one surface of the electronic device 800.

The key input device 817 may be disposed on the side surface 810C of the housing 810. In an embodiment, the electronic device 800 may exclude all or some of the above-mentioned key input devices 817 and the excluded key input devices 817 may be implemented in other forms, e.g., as soft keys, on the display 801. In an embodiment, the key input device may include the sensor module 816 disposed on the second surface 810B of the housing 810.

The light emitting device 806 may be disposed on, e.g., the first surface 810A of the housing 810. The light emitting device 806 may provide, e.g., information about the state of the electronic device 800 in the form of light. In an embodiment, the light emitting device 806 may provide a light source that interacts with, e.g., the camera module 805. The light emitting device 806 may include, e.g., a light emitting diode (LED), an infrared (IR) LED, or a xenon lamp.

The connector holes 808 and 809 may include a first connector hole 808 for receiving a connector (e.g., a universal serial bus (USB) connector) for transmitting or receiving power and/or data to/from an external electronic device and/or a second connector hole 809 (e.g., an earphone jack) for receiving a connector for transmitting or receiving audio signals to/from the external electronic device.

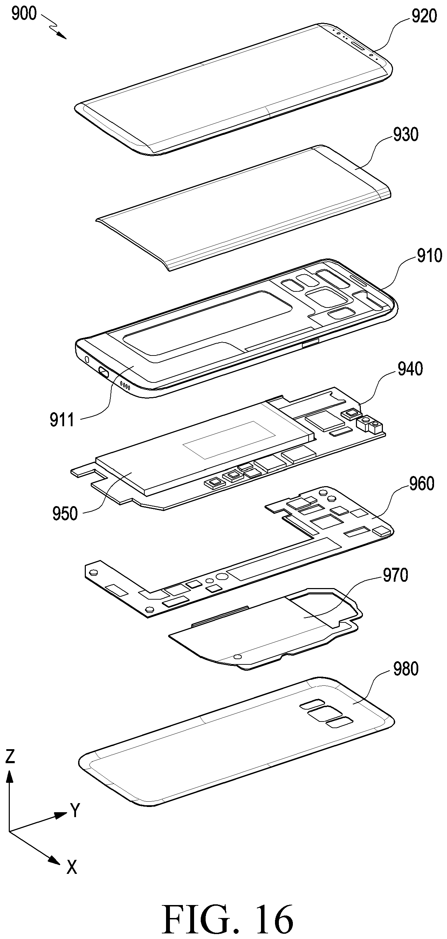

FIG. 16 is an exploded perspective view illustrating the electronic device 900 of FIG. 14 according to an embodiment of the disclosure.

Referring to FIG. 16, an electronic device 900 may include a side structure 910, a first supporting member 911 (e.g., a bracket), a front plate 920, a display 930, a printed circuit board 940, a battery 950, a second supporting member 960 (e.g., a rear case), an antenna 970, and a rear plate 980. In an embodiment, the electronic device 900 may exclude at least one (e.g., the first supporting member 911 or the second supporting member 960) of the components or may add other components. At least one of the components of the electronic device 900 may be the same or similar to at least one of the components of the electronic device 800 of FIG. 14 or 15 and no duplicate description is made below.

The first supporting member 911 may be disposed inside the electronic device 900 to be connected with the side surface structure 910 or integrated with the side surface structure 910. The first supporting member 911 may be formed of, e.g., a metallic material and/or non-metallic material (e.g., polymer). The display 930 may be joined onto one surface of the first supporting member 911, and the printed circuit board 940 may be joined onto the opposite surface of the first supporting member 232. A processor, memory, and/or interface may be mounted on the printed circuit board 940. The processor may include one or more of, e.g., a central processing unit, an application processor, a graphic processing device, an image signal processing, a sensor hub processor, or a communication processor.

The memory may include, e.g., a volatile or non-volatile memory.

The interface may include, e.g., a high definition multimedia interface (HDMI), a universal serial bus (USB) interface, a secure digital (SD) card interface, and/or an audio interface. The interface may electrically or physically connect, e.g., the electronic device 900 with an external electronic device and may include a USB connector, an SD card/multimedia card (MMC) connector, or an audio connector.

The battery 950 may be a device for supplying power to at least one component of the electronic device 900. The battery 450 may include, e.g., a primary cell which is not rechargeable, a secondary cell which is rechargeable, or a fuel cell. At least a portion of the battery 950 may be disposed on substantially the same plane as the printed circuit board 940. The battery 950 may be integrally or detachably disposed inside the electronic device 900. For example, the battery 950 may be implemented by any one of the battery 370 or the battery packs 400, 500, 600, and 700 described with reference to FIGS. 4 to 13.

The antenna 970 may be disposed between the rear plate 980 and the battery 950. The antenna 970 may include, e.g., a near-field communication (NFC) antenna, a wireless charging antenna, and/or a magnetic secure transmission (MST) antenna. The antenna 970 may perform short-range communication with, e.g., an external device or may wirelessly transmit or receive power necessary for charging. In an embodiment of the present invention, an antenna structure may be formed by a portion or combination of the side structure 910 and/or the first supporting member 911.

As described above, according to an embodiment of the disclosure, a battery pack (e.g., the battery pack 189 and 370 of FIGS. 1 and 4 or the battery pack 400, 500, and 600 of FIGS. 5, 6, 9, and 12) may include a battery cell (e.g., the battery cell 403 of FIGS. 6, 7, 11, and 12) including an electrode assembly (e.g., the electrode assembly 431 of FIG. 6) and electrode tabs (e.g., the electrode tabs 433a, 433b of FIGS. 6, 7, 11, and 12) extending from the electrode assembly, a first casing (e.g., the first casing 401 of FIGS. 5 to 12) including a first inner surface (e.g., the first inner surface 411a of FIG. 8), a space partially defined by the first inner surface and configured to receive at least part of the electrode assembly, and a stepped portion (e.g., the stepped portion 415 of FIG. 8) provided at one side of the first inner surface, and a second casing (e.g., the second casing 402 of FIGS. 5, 6, 11, and 12) including a second inner surface (e.g., the second inner surface 421 of Fig. 11) disposed to face the first inner surface and coupled to the first casing to seal an inner space of the first casing. In an embodiment, the electrode tabs may be disposed between the second inner surface and the stepped portion while being in contact with the stepped portion.

According to an embodiment, a gap between the second inner surface and the stepped portion may be smaller than a gap between the first inner surface and the second inner surface.

According to an embodiment, the electrode tabs may be disposed parallel to the first inner surface or inclined at an angle within 10 degrees with respect to the first inner surface.

According to an embodiment, the first casing may include an open face (e.g., the open face 411d of FIG. 8). In an embodiment, when the first casing includes the open face, the second casing may be coupled to the open face of the first casing to seal an inner space the first casing.

According to an embodiment, the stepped portion may include a first stepped area (e.g., the first stepped area 415a of Fig. 8) formed parallel to the first inner surface or inclined at an angle within 10 degrees with respect to the first inner surface. In an embodiment, the electrode tabs may be coupled to the first stepped area between the second inner surface and the stepped portion.

According to an embodiment, the battery pack may further include a seating recess (e.g., the seating recess 411c of FIGS. 5, 8, and/or 9) formed corresponding to the stepped portion outside the first casing.

According to an embodiment, the battery pack as described above may further include electrode terminals (e.g., the electrode terminals 417a and 417b of FIGS. 5 to 9) disposed on the stepped portion and coupled to the electrode tabs, and a seating recess formed corresponding to the stepped portion outside the first casing. In an embodiment, a part of the electrode terminals may be exposed to the inside of the first casing on the stepped portion, and another part of the electrode terminals may be exposed to the outside of the first casing on the seating recess.

In accordance with an embodiment, the battery pack as described above may further include a circuit board (e.g., the base substrate 541 of Figs. 9 to 12) disposed in the seating recess. In an embodiment, the circuit board may be electrically connected to the electrode tabs via the electrode terminals.

According to an embodiment, the battery pack as described above may further include electrode terminals disposed on the stepped portion and coupled to the electrode tabs, and a circuit board disposed on an outer surface of the first casing. In an embodiment, the circuit board may be electrically connected to the electrode tabs via the electrode terminals.

According to an embodiment, the stepped portion may include a first stepped area disposed parallel to the first inner surface or inclined at an angle within 10 degrees with respect to the first inner surface, and a second stepped area (e.g., the second stepped area 415b of FIG. 8) extending between the first inner surface and the first stepped area and aligned in a direction inclined to the first stepped area or in a direction crossing the first stepped area.

According to an embodiment, a portion of the electrode assembly may be disposed to face the second stepped area. In an embodiment, when a portion of the electrode assembly is disposed to face the second stepped area, the electrode tabs may be coupled to the first stepped area between the second inner surface and the stepped portion.

According to an embodiment, the battery pack as described above may further include a seating recess formed corresponding to the stepped portion outside the first casing, a circuit board disposed in the seating recess, and electrode terminals disposed in the first stepped area and coupled to the electrode tabs. In an embodiment, the circuit board may be electrically connected to the electrode tabs via the electrode terminals.

According to an embodiment, the electrode tabs may extend in a first direction, and any one surface of the electrode tabs may be aligned to face the electrode terminals or coupled to the electrode terminals in a second direction crossing the first direction.

According to an embodiment of the present disclosure, the electronic device (e.g., the electronic devices 101, 102, 104, 200, and 300 of FIGS. 1 to 4) comprises a housing (e.g., the housing 220 of FIG. 2) including a front surface (e.g., the first surface 220A of FIG. 2) and a rear surface (e.g., the second surface 220B of FIG. 2) facing the opposite direction of the front surface, a display (e.g., the display module 160 in FIG. 1 or the display 320 in FIG. 4) configured to output a screen through at least a portion of the front surface, and a battery pack as described above (e.g., the battery pack 189 and 370 of FIGS. 1 and 4 or the battery pack 400, 500, and 600 of FIGS. 5, 6, 9, and 12) disposed between the display and the rear surface.

According to an embodiment, the electronic device as described above may further include a main circuit board (e.g., the printed circuit board 380 of FIG. 4) disposed between the display and the rear surface. The battery pack may be at least partially disposed on the same plane as the main circuit board.

According to an embodiment of the disclosure, a battery pack (e.g., the battery 189 or 370 of FIG. 1 or 4, or the battery pack 400, 500, or 600 of FIG. 5, 6, 9, or 12) comprises a first casing (e.g., the first casing 401 of FIGS. 5 to 12) including a first inner surface (e.g., the first inner surface 411a of FIG. 8), an inner wall surface (e.g., the first inner wall surface(s) 413a or 413b of FIG. 8) extending from an edge of the first inner surface, and a stepped portion (e.g., the stepped portion 415 of FIG. 8) protruding from the inner wall surface, a second casing (e.g., the second casing 402 of FIG. 5, 6, 11, and/or 12) including a second inner surface (e.g., the second inner surface 421 of FIG. 11) disposed to face the first inner surface and coupled to the first casing to seal a space surrounded by the first inner surface and the inner wall surface, a battery cell (e.g., the battery cell 403 of FIG. 6, 7, 11, and/or 12) at least partially, preferably completely, received in a space between the first inner surface and the second inner surface and including a first main surface (e.g., the first main surface F1 of FIG. 5) facing the first inner surface, a second main surface (e.g., the second main surface F2 of FIG. 5) disposed to face in a direction opposite to the first main surface and facing the second inner surface, and an outer wall surface (e.g., the outer wall surface F3 of FIG. 5) connecting the second main surface to the first main surface and facing at least a portion of the stepped portion or the inner wall surface, and an electrode tab (e.g., the electrode tabs 433a or 433b of FIG. 6, 7, 11, and/or 12) extending from the battery cell. The electrode tab is disposed between the second inner surface and the stepped portion while being in contact with the stepped portion. The battery pack allows to have a battery capacity enhanced relative to the overall volume.

According to an embodiment, the electrode tab may extend from the outer wall surface.

According to an embodiment, at least a portion of the electrode tab, preferably at least 50 percent of the electrode tab, particularly preferred the whole electrode tab may be disposed to be parallel to, or inclined at an angle of 10 degrees or less from, the first inner surface. This facilitates the manufacturing of the battery pack.

According to an embodiment, the battery pack may further comprise an electrode terminal (e.g., the electrode terminal 417a or 417b of FIGS. 5 to 9) disposed, in particular directly disposed, on the stepped portion. In an embodiment, the electrode terminal may have a portion exposed to an inside of the first casing and another portion exposed to an outside of the first casing. In an embodiment, the electrode tab may be coupled to the electrode terminal. Thus, the manufacturing of the battery pack may be facilitated.

According to an embodiment, at least a portion of the electrode tab may be disposed to be parallel to, or inclined at an angle of 10 degrees or less from, the first inner surface.

According to an embodiment, the battery pack may further comprise a circuit board (e.g., the base substrate 541 of FIGS. 9 to 12) disposed, in particular directly disposed, on an outer surface of the first casing and an electrode terminal (e.g., the electrode terminal 417a or 417b of FIGS. 5 to 9) disposed on the stepped portion to electrically connect the electrode tab to the circuit board. In an embodiment, at least a portion of the electrode tab may be disposed to be parallel to, or inclined at an angle of 10 degrees or less from, the circuit board.

According to an embodiment, the battery pack may further comprise a seating recess (e.g., the seating recess 411c of FIG. 5, 8, and/or 9) formed on an outer surface of the first casing and at least partially, preferably completely, corresponding to the stepped portion. In an embodiment, the circuit board may be disposed in the seating recess.

According to an embodiment, a portion of the electrode terminal may be exposed to the seating recess.

According to an embodiment of the disclosure, a battery pack, preferably the above-mentioned battery pack, (e.g., the battery 189 or 370 of FIG. 1 or 4, or the battery pack 400, 500, or 600 of FIG. 5, 6, 9, or 12) may comprise a battery cell (e.g., the battery cell 403 of FIG. 6, 7, 11, and/or 12) including an electrode tab (e.g., the electrode tab 433a or 433b of FIG. 6, 7, 11, and/or 12) extending in one direction, a first casing (e.g., the first casing 401 of FIGS. 5 to 12) receiving at least a portion of the battery cell and including a stepped portion (e.g., the stepped portion 415 of FIG. 8) protruding from an inner wall surface to the battery cell and one open face (e.g., the open face 411d of FIG. 8), and a second casing (e.g., the second casing 402 of FIG. 5, 6, 11, and/or 12) coupled to the one open face of the first casing to seal the battery cell. In an embodiment, the electrode tab may be at least partially disposed between an inner surface of the second casing and the stepped portion while being in contact with the stepped portion. The open face may be understood as an open side of the first casing or an opening substantially completely extending along a surface of the first casing opposite to the first inner surface.

According to an embodiment, at least a portion of the electrode tab may be disposed to be parallel to, or inclined at an angle of 10 degrees or less from, the inner surface of the second casing.

According to an embodiment, the battery pack may further comprise an electrode terminal (e.g., the electrode terminal 417a or 417b of FIGS. 5 to 9) disposed on the stepped portion and having a portion exposed to an inside of the first casing and another portion exposed to an outside of the first casing. In an embodiment, the electrode tab may be coupled to the electrode terminal.

According to an embodiment, the battery pack may further comprise a seating recess (e.g., the seating recess 411c of FIG. 5, 8, and/or 9) formed on an outer surface of the first casing and a circuit board (e.g., the base substrate 541 of FIGS. 9 to 12) disposed in the seating recess and electrically connected with the electrode tab.

According to an embodiment, the battery pack may further comprise an electrode terminal (e.g., the electrode terminal 417a or 417b of FIGS. 5 to 9) disposed on the stepped portion to electrically connect the circuit board and the electrode tab. In an embodiment, the electrode terminal may have a portion exposed to an inside of the first casing and another portion exposed to an outside of the first casing on the seating recess.

According to an embodiment of the disclosure, an electronic device (e.g., the electronic device 101, 102, 104, 200, or 300 of FIGS. 1 to 4) comprises a housing (e.g., the housing 220 of FIG. 2) including a front surface (e.g., the first surface 220A of FIG. 2) and a rear surface (e.g., the second surface 220B of FIG. 2) facing in a direction opposite to the front surface, a display (e.g., the display module 160 of FIG. 1 or the display 320 of FIG. 4) configured to output a screen through at least a portion of the front surface, and a battery pack (e.g., the battery 189 or 370 of FIG. 1 or 4 or the battery pack 400, 500, or 600 of FIG. 5, 6, 9, or 12) disposed between the display and the rear surface.. The battery pack of the electronic device may be the above-mentioned battery pack. Optional features of the above-mentioned battery pack and their advantages may be analogously applied to the electronic device. A recurrent description thereof is thus omitted. The battery pack may include a battery cell (e.g., the battery cell 403 of FIG. 6, 7, 11, and/or 12) including an electrode tab (e.g., the electrode tab 433a or 433b of FIG. 6, 7, 11, and/or 12) extending in one direction, a first casing (e.g., the first casing 401 of FIGS. 5 to 12) receiving at least a portion of the battery cell and including a stepped portion (e.g., the stepped portion 415 of FIG. 8) protruding from an inner wall surface (e.g., the first inner wall surface(s) 413a or 413b of FIG. 8) to the battery cell and one open face (e.g., the open face 411d of FIG. 8), and a second casing (e.g., the second casing 402 of FIG. 5, 6, 11, and/or 12) coupled to the one open face of the first casing to seal the battery cell. The electrode tab is at least partially disposed between an inner surface of the second casing and the stepped portion while being in contact with the stepped portion.

According to an embodiment, the electronic device may further comprise a wearing member (e.g., the wearing member 250, 260, 395, or 397 of FIGS. 2 and 3) detachably fastened to at least a partial area of the housing.

According to an embodiment, the electronic device may further comprise a main circuit board (e.g., the printed circuit board 380 of FIG. 4) disposed between the display and the rear surface. The battery pack may be at least partially disposed on the same plane as the main circuit board.

According to an embodiment, at least a portion of the electrode tab may be disposed to be parallel to, or inclined at an angle of 10 degrees or less from, the inner surface of the second casing.

According to an embodiment, the battery pack may further include an electrode terminal (e.g., the electrode terminal 417a or 417b of FIGS. 5 to 9) disposed on the stepped portion and having a portion exposed to an inside of the first casing and another portion exposed to an outside of the first casing. In an embodiment, the electrode tab may be coupled to the electrode terminal.

According to an embodiment, the battery pack may further include a seating recess (e.g., the seating recess 411c of FIG. 5, 8, and/or 9) formed on an outer surface of the first casing and a circuit board (e.g., the base substrate 541 of FIGS. 9 to 12) disposed in the seating recess and electrically connected with the electrode tab.

According to an embodiment, the battery pack may further include an electrode terminal disposed on the stepped portion to electrically connect the circuit board and the electrode tab. In an embodiment, the electrode terminal may have a portion exposed to an inside of the first casing and another portion exposed to an outside of the first casing on the seating recess.

While the disclosure has been described and shown in connection with an embodiment, it should be appreciated that an embodiment is intended as limiting the invention but as illustrative. It will be apparent to one of ordinary skill in the art that various changes may be made in form and detail without departing from the overall scope of the disclosure, including the appended claims and their equivalents. For example, in describing an embodiment(s) of the disclosure, although the electrode tab or electrode terminal is mentioned in the singular form, it will be appreciated by one of ordinary skill in the art that a plurality of electrode tabs or electrode terminals in the battery configuration for supplying power may be provided.

## Claims

1. A battery pack (189, 370, 400, 500, 600, 700) comprising:
a battery cell (403) including an electrode assembly (431), and electrode tabs (433a, 433b) extending from the electrode assembly (431);
a first casing (401) including a first inner surface (411a), a space partially defined by the first inner surface and configured to accommodate at least a portion of the electrode assembly (431), and a stepped portion (415) provided at one side of the first inner surface 411a; and
a second casing (402) including a second inner surface (421) disposed to face the first inner surface (411a) and coupled to the first casing (401) to seal the first casing (401);
wherein the electrode tabs (433a, 433b) are disposed between the second inner surface (421) and the stepped portion (415) while being in contact with the stepped portion (415).

2. The battery pack (189, 370, 400, 500, 600, 700) of claim 1, wherein a gap between the second inner surface (421) and the stepped portion (415) is smaller than a gap between the first inner surface (411a) and the second inner surface (421).

3. The battery pack (189, 370, 400, 500, 600, 700) of claim 1 or 2, wherein the electrode tabs (433a, 433b) are disposed to be parallel to, or inclined at an angle of 10 degrees or less from, the first inner surface (411a).

4. The battery pack (189, 370, 400, 500, 600, 700) any one of claims 1 to 3, wherein the first casing (401) includes an open face (411d), and
wherein the second casing (401) is coupled to the open face (411d) of the first casing (401) to seal the first casing (401).

5. The battery pack (189, 370, 400, 500, 600, 700) any one of claims 1 to 4,
wherein the stepped portion (415) includes a first stepped area (415a) formed to be parallel to, or inclined at an angle of 10 degrees or less from, the first inner surface (411a),
wherein the electrode tabs (433a, 433b) are coupled onto the first stepped area (415a) between the second inner surface (421) and the stepped portion (415).

6. The battery pack (189, 370, 400, 500, 600, 700) any one of claims 1 to 5, further comprising:
a seating recess (41 1c) formed on an outside of the first casing (401) and corresponding to the stepped portion (415).

7. The battery pack (189, 370, 400, 500, 600, 700) of any one of claims 1 to 5, further comprising:
an electrode terminals (417a, 417b) disposed on the stepped portion (415) and coupled to the electrode tabs (433a, 433b); and
a seating recess (41 1c) formed on an outside of the first casing (401) and corresponding to the stepped portion (415),
wherein a portion of the electrode terminals (417a, 417b) is exposed to an inside of the first casing (401) on the stepped portion (415) and another portion of the electrode terminals (417a, 417b) is exposed to the outside of the first casing (401) on the seating recess (41 1c).

8. The battery pack (189, 370, 400, 500, 600, 700) of claim 7, further comprising:
a circuit board (541) disposed on the seating recess (411c),
wherein the circuit board (541) is electrically connected to the electrode tabs (433a, 433b) via the electrode terminals (417a, 417b).

9. The battery pack (189, 370, 400, 500, 600, 700) of any one of claims 1 to 5, further comprising:
an electrode terminal (417a, 417b) disposed on the stepped portion (415) and coupled to the electrode tabs (433a, 433b); and
a circuit board (541) disposed on an outer surface of the first casing (401);
wherein the circuit board (541) is electrically connected to the electrode tabs (433a, 433b) via the electrode terminals (417a, 417b).

10. The battery pack (189, 370, 400, 500, 600, 700) of any one of claims 1 to 4, wherein the stepped portion (415) includes:
a first stepped area (415a) disposed to be parallel to, or inclined at an angle of 10 degrees or less from, the first inner surface (411a); and
a second stepped area (415b) extended between the first inner surface (411a) and the first stepped area (415a), and disposed in an inclined direction from the first stepped area (415a) or in a direction crossing the first stepped area (415a).

11. The battery pack (189, 370, 400, 500, 600, 700) of claim 10, wherein a portion the electrode assembly (431) is disposed to face the second stepped area (415b), and
wherein the electrode tabs (433a, 433b) are coupled onto the first stepped area (415a) between the second inner surface (421) and the stepped portion (415).

12. The battery pack (189, 370, 400, 500, 600, 700) of any one of claims 10 to 11, further comprising:
a seating recess (411c) formed on an outside of the first casing (401) and corresponding to the stepped portion (415);
a circuit board (541) disposed on the seating recess (411c); and
an electrode terminals (417a, 417b) disposed on the first stepped area (415a) and coupled to the electrode tabs (433a, 433b);
wherein the circuit board (541) is electrically connected to the electrode tabs (433a, 433b) via the electrode terminals (417a, 417b).

13. The battery pack (189, 370, 400, 500, 600, 700) of claim 12, wherein the electrode tabs (433a, 433b) are extended along a first direction, and
wherein a face of the electrode tabs (433a, 433b) is arranged to face or coupled to the electrode terminals (417a, 417b) in a second direction across the first direction.

14. An electronic device (101, 102, 104, 200, 300, 800, 900) comprising:
a housing (220) including a front surface (220A) and a rear surface (220B) facing in a direction opposite to the front surface (220A);
a display (160, 320) configured to output a screen through at least a portion of the front surface (220A); and
the battery pack (189, 370, 400, 500, 600, 700) of any one of claims 1 to 13 disposed between the display (160, 320) and the rear surface (220B).

15. The electronic device (101, 102, 104, 200, 300, 800, 900) of claim 14, further comprising:
a main circuit board (380) disposed between the display (160, 320) and the rear surface (220B),
wherein the battery pack (189, 370, 400, 500, 600, 700) is at least partially disposed on the same plane as the main circuit board (380).
